# EUROPÄISCHE PATENTSCHRIFT

(11) **EP 3 395 611 B1**
(45) Veröffentlichungstag und Bekanntmachung des Hinweises auf die Patenterteilung: **13.10.2021**
(21) Anmeldenummer: 18162616.9
(22) Anmeldetag: 19.03.2018
(51) Int. Cl.: B60P 7/08

(54) **VERZURRSCHIENE, LADERAUMFLÄCHE, FAHRZEUG**
LASHING RAIL, LOADING SPACE AREA, VEHICLE
RAIL D'ARRIMAGE, ESPACE DE CHARGEMENT, VÉHICULE

(30) Priorität: 24.04.2017 DE 102017206874
(43) Veröffentlichungstag der Anmeldung: 31.10.2018
(73) Patentinhaber: VOLKSWAGEN AKTIENGESELLSCHAFT, 38440 Wolfsburg (DE)
(72) Erfinder: Szala, Marcin, 44-246 Szczejkowice (PL); Büttner, Rainer, 38442 Wolfsburg (DE)

(56) Entgegenhaltungen:
- EP-A2- 2 910 420
- DE-A1- 10 057 577
- DE-A1-102013 102 247
- DE-A1-102014 212 801

## Beschreibung

Die Erfindung bezieht sich auf ein Fahrzeug mit einem Ladeboden, der eine Mehrzahl von Verzurrschienen für die Befestigung von Ladegut an einem Fahrzeug mittels Verzurrelementen aufweist,
wobei die Verzurrschienen jeweils mit einem länglich ausgebildeten Grundkörper an einer Laderaumfläche des Fahrzeugs angeordnet sind,
und wobei der Grundkörper jeweils ein im Querschnitt zumindest weitgehend offenes Profil zur Aufnahme der Verzurrelemente aufweist,
wobei die Verzurrschienen ferner jeweils ein im Querschnitt zumindest weitgehend geschlossenes Profil umfassen, das parallel zu dem zumindest weitgehend offenen Profil angeordnet ist.

Fahrzeuge, insbesondere Kraftfahrzeuge, die für Transportzwecke eingesetzt werden oder werden sollen, werden oftmals mit Verzurrschienen ausgerüstet, die der Befestigung von Ladegut an dem Fahrzeug mittels Verzurrelementen dienen. Als Ladegut kommen dabei Güter, Waren, Gepäckstücke, aber auch beispielsweise Sitze oder Sitzbänke für Fahrzeugpassagiere infrage. Weit verbreitet sind für diesen Zweck beispielsweise sogenannte Airline-Schienen, die zuerst im Luftfahrtbereich eingesetzt wurden, mittlerweile aber auch bei Landfahrzeugen oftmals verwendet werden.

Ein kritischer Punkt ist dabei die Befestigung der Verzurrschienen an dem Fahrzeug, insbesondere an einem Kraftfahrzeug. Eine Schraub- oder Nietverbindung unmittelbar mit der Karosserie des Fahrzeugs - zum Beispiel mit einem Karosserieladeboden - bewirkt zwar eine sehr feste und stabile Verbindung mit der Fahrzeugkarosserie, resultiert aber andererseits in einer Vielzahl von Schraub- bzw. Nietlöchern im Karosserieladeboden, die mögliche Korrosionsansatzpunkte sind. Eine Verklebung mit dem Karosserieladeboden ist oftmals ebenfalls nicht erwünscht, da eine Klebeverbindung den Ausbau oder den Austausch der Verzurrschiene erschwert oder unmöglich macht.

Bei Nutzfahrzeugen ist es daher weit verbreitet, den Transportraum nachträglich mit Zusatzladeböden zu versehen. Diese Zusatzladeböden haben die Funktion, die Karosserieladefläche vor Beschädigungen zu schützen und darüber hinaus eine ebene Ladefläche auf den oftmals vorhandenen Sickenblechen der Karosserie zu bilden. Durch den Einsatz eines Zusatzladebodens bietet sich außerdem die Möglichkeit, die Verzurrschiene ganz oder teilweise in den Zusatzladeboden einzulassen oder zu integrieren, so dass sich eine vollständig ebene Ladebodenoberfläche ergibt. Außerdem können die Zusatzladböden bei Beschädigungen oder Verschleiß leicht ausgetauscht oder nach Ende der Nutzungszeit des Fahrzeugs ganz entfernt werden.

Im Falle der Befestigung einer Verzurrschiene an einem solchen Zusatzladeboden stellt sich aber die Frage einer sicheren und stabilen Verbindung der Verzurrschiene mit dem Fahrzeug. Es muss gewährleistet sein, dass eine an dem Zusatzladeboden angeordnete Verzurrschiene prinzipiell ähnliche Kräfte aus den Verzurrelementen aufnehmen kann wie dies bei einer Anbringung der Verzurrschiene direkt an der Kraftfahrzeugkarosserie der Fall ist. Zusatzladeböden, die in der Regel aus Holzwerkstoffen oder aus Metall-Kunststoff-Compound-Materialien gefertigt werden, haben aber in der Regel eine geringere Steifigkeit als der Karosserieladeboden des Fahrzeugs.

Aus der EP 2 910 420 A2 ist eine Verzurrschiene für die Befestigung von Ladegut an einem Transportfahrzeug mittels Fittingelementen bekannt. Die Verzurrschiene ist mit einem im Wesentlichen im Querschnitt rechteckförmigen Grundkörper in einer länglich ausgebildeten Nut eines Zusatzladebodens des Transportfahrzeugs angeordnet. An der dem Transportfahrzeugfahrgestell zugewandten Unterseite des Grundkörpers sind längsseitlich vorstehende Klebeschienen festgelegt, die in an der Unterseite des Zusatzladebodens eingebrachte Ausnehmungen eingreifen.

Die DE 10 2014 212 801 A1 beschreibt eine Befestigungsschiene zur Halterung und/oder Sicherung zumindest eines Gegenstandes in einem Fahrzeug, wobei die Befestigungsschiene einen Profilsteg und zwei Profilflansch aufweist. Der Profilsteg weist ein geschlossenes, Kasten förmliches Profil und eine darüber liegende T-förmige Nut auf.

Aus der DE 100 57 577 A1 ist eine Halteschiene aus Metall, insbesondere aus einer Aluminiumslegierung bekannt, die einen Schienenkörper mit einem Hohlprofil, das einen quadratischen Querschnitt sowie in der Oberfläche eines Formstreifens eine hintere geschnittene Längsnut aufweist. Die Längsnot ist mit rund Ausnehmungen oder Bohrungen versehen.

Es besteht die Aufgabe, ein Fahrzeug mit verbesserten Verzurrschienen für die Befestigung von Ladegut an einem Fahrzeug mittels Verzurrelementen vorzuschlagen. Insbesondere besteht die Aufgabe, Verzurrschienen dahingehend zu verbessern, dass sie auch bei einer Anbringung an einem Zusatzladeboden eine ausreichend stabile Befestigung und Lastaufnahme für Verzurrelemente bieten.

Nach einem ersten Aspekt der Erfindung wird die Erfindung durch ein Fahrzeug mit den Merkmalen des Anspruchs 1 gelöst. Das neuartige Fahrzeug besitzt Verzurrschienen mit einem länglich ausgebildeten Grundkörper, der an einer Laderaumfläche des Fahrzeugs angeordnet ist. Unter einer Laderaumfläche des Fahrzeugs wird dabei jegliche Boden-, Seitenwand- oder Deckenfläche eines Transportraums des Fahrzeugs angeordnet. Der Transportraum kann dem Transport von Gütern, Waren, Gepäckstücken und/oder Fahrzeuginsassen dienen. Es kann sich um einen geschlossenen oder um einen offenen Transportraum handeln. Grundsätzlich kann die erfindungsgemäße Transportschiene auch an einer Außenwand oder an der Ober- oder Unterseite des Fahrzeugs vorteilhaft eingesetzt werden. Insbesondere ist aber vorgesehen, die Verzurrschiene an einem Ladeboden, vorzugsweise an einem Zusatzladeboden, des Fahrzeugs anzuordnen. Der vorgeschlagene Grundkörper besitzt im Querschnitt ein zumindest weitgehend offenes Profil zur Aufnahme von Verzurrelementen. Mit "ein zumindest weitgehend offenes Profil" ist gemeint, dass das Profil über derartig große und/oder derartig viele Öffnungen verfügt, dass übliche Verzurrelemente sinnvoll an der Verzurrschiene aufgenommen werden können. In vielen Fällen besitzen Verzurrschienen - beispielsweise die bekannten Airline-Schienen - ein entlang ihrer Längserstreckung durchgehend offenes Profil, so dass im Wesentlichen entlang ihrer gesamten Längserstreckung Verzurrelemente von ihnen aufgenommen werden können. Die Verzurrelemente selbst sind nicht Gegenstand der Erfindung und sind zum anderen aus dem Stand der Technik in großer Vielzahl bekannt, so dass sie hier nicht gesondert beschrieben werden müssen.

Erfindungsgemäß umfasst die Verzurrschiene ferner im Querschnitt ein zumindest weitgehend geschlossenes Profil, dass parallel zu dem zumindest weitgehend offenen Profil angeordnet ist. Durch das Vorsehen eines parallel angeordneten, zumindest weitgehend geschlossenen Profils wird die Festigkeit und Steifigkeit der neuartigen Verzurrschiene insgesamt deutlich erhöht. Wird die neuartige Verzurrschiene beispielsweise an einem Zusatzladeboden aus einem Holzwerkstoff angebracht, wird dadurch auch die Festigung und Steifigkeit des Zusatzladebodens deutlich erhöht, so dass dieser zuverlässiger und stabiler Belastungskräfte aus den auf die Verzurrelemente wirkenden Kräften aufnehmen kann. Unter "zumindest weitgehend geschlossenes" Profil wird dabei verstanden, dass das Profil im Querschnitt entweder vollständig geschlossen ist oder entlang seiner Längserstreckung nur eine im Vergleich zu dem zumindest weitgehend offenen Profil relativ geringe Anzahl relativ kleiner Öffnungen aufweist, die beispielsweise genutzt werden können, um die Verzurrschiene an einem Zusatzladeboden und/oder an einer Fahrzeugkarosserie festzulegen.

Bevorzugt verfügt das zumindest weitgehend offene Profil über zumindest eine in seiner Längserstreckung ausgerichtete, länglich ausgebildete Aufnahmeöffnung zur Aufnahme von Verzurrelementen und/oder über mehrere Aufnahmeöffnungen zur Aufnahme von Verzurrelementen, wobei im letzteren Falle die Aufnahmeöffnungen kollinear entlang der Längserstreckung des zumindest weitgehend offenen Profils angeordnet sind. Auf diese Weise wird erreicht, dass Verzurrelemente bequem an dem offenen Profil angeordnet werden können. Grundsätzlich sind dabei alle bekannten Verzurrelemente denkbar, beispielsweise Verzurrösen, Verzurrringe, Nutsteine, Verzurrstücke oder ähnliches. Die Anbringung eines Verzurrelements an dem zumindest weitgehend offenen Profil kann - abhängig von den geometrischen Abmessungen und aufzunehmenden Kräften von Verzurrelement und zumindest weitgehend offenem Profil - ganz oder teilweise in dem zumindest weitgehend offenen Profil und/oder auf der Außenseite, insbesondere auf der Oberseite, des zumindest weitgehend offenen Profils geschehen.

Um eine optimale Verstärkung und Steifigkeitserhöhung des zumindest weitgehend offenen Profils zu erreichen, ist bevorzugt, dass das zumindest weitgehend geschlossene Profil an dem zumindest weitgehend offenen Profil angeordnet ist. Das zumindest weitgehend offene Profil und das zumindest weitgehend geschlossene Profil können dabei im Querschnitt über eine gemeinsame Profilwandung verfügen, was die Festigkeit noch weiter erhöhen kann und das Gewicht der Verzurrschiene verringert.

Die Festigkeit und Steifigkeit der Verzurrschiene wird noch weiter erhöht und die Herstellung noch weiter vereinfacht, wenn das zumindest weitgehend offene Profil und das zumindest weitgehend geschlossene Profil einstückig miteinander ausgeführt sind. Beispielsweise kann die Verzurrschiene mit dem zumindest weitgehend offenen Profil und dem zumindest weitgehend geschlossenen Profil einstückig als Strangpressprofil aus einer Aluminiumlegierung hergestellt sein. Dies erlaubt eine besonders einfache und kostgengünstige Herstellung der Verzurrschiene in einem kontinuierlichen Herstellungsverfahren.

Eine besonders gute Verbindung zwischen dem zumindest weitgehend offenen Profil und dem zumindest weitgehend geschlossenen Profil und damit eine weitere Erhöhung der Stabilität der Verzurrschiene wird erzielt, wenn das zumindest weitgehend geschlossene Profil gegenüberliegend der mindestens einen länglich ausgebildeten Aufnahmeöffnung und/oder gegenüberliegend den mehreren Aufnahmeöffnungen angeordnet ist.

Ferner wird bevorzugt, dass das zumindest weitgehend offene Profil und das zumindest weitgehend geschlossene Profil über Durchgangsöffnungen verfügen, mittels derer ein Befestigungsmittel, insbesondere eine Schraube oder ein Niet, durch das zumindest weitgehend offene Profil hindurch in das zumindest weitgehend geschlossene Profil hinein überführbar ist. Dieses Befestigungsmittel kann dann bevorzugt dazu dienen, die Verzurrschiene mittels des Befestigungsmittels an der Karosserie des Fahrzeugs anzubringen, beispielsweise zu verschrauben. Die über das Befestigungsmittel zwischen der Verzurrschiene und der Fahrzeugkarosserie ausgetauschten Kräfte wirken dann unmittelbar an dem besonders stabilen zumindest weitgehend geschlossenen Profil, das gegenüber dem zumindest weitgehend offenen Profil eine besonders hohe Eigensteifigkeit besitzt.

Um die Verzurrschiene sicher an einem Ladeboden, insbesondere an einem Zusatzladeboden, des Fahrzeugs zu befestigen, kann die Verzurrschiene über mindestens einen, vorzugsweise zwei in der Längserstreckung der Verzurrschiene ausgerichtete, länglich ausgebildete Anbringungsflansche verfügen. Diese Anbringungsflansche können beispielsweise als Klebeflansche ausbildet sein und Klebeflächen für eine Klebeverbindung zwischen der Verzurrschiene und dem Ladeboden, insbesondere dem Zusatzladeboden, zur Verfügung stellen.

Nach einem zweiten Aspekt der Erfindung wird die Aufgabe gelöst durch eine Laderaumfläche eines Fahrzeugs, wobei an der Laderaumfläche mindestens eine erfindungsgemäße Verzurrschiene angeordnet ist.

Es wird bevorzugt, dass die Verzurrschiene zumindest teilweise in einer länglich ausgebildeten Nut der Laderaumfläche angeordnet ist. Auf diese Weise kann eine ebene oder zumindest weitgehend ebene Oberfläche der Laderaumfläche erzielt werden.

Wird die Verzurrschiene durch eine Klebeverbindung mit der Laderaumfläche verbunden, so kann eine besonders stabile und einfach herzustellende Anbringung der Verzurrschiene an der Laderaumfläche erreicht werden. Eine noch weiter verbesserte Haltekraft einer solchen Klebeverbindung wird erzielt, wenn mindestens ein, bevorzugt zwei Anbringungsflansche der oben genannten Art an der Verzurrschiene vorhanden sind, die als Klebeflansche dienen. Durch eine Klebeverbindung beispielsweise zwischen einer Verzurrschiene aus einer Aluminiumlegierung und einem Ladeboden oder einem Zusatzladeboden aus einem Holzwerkstoff oder aus einem Metall-Kunststoff-Compound können sehr hohe Festigkeitswerte erzielt werden.

Insbesondere wird bevorzugt, die Laderaumfläche, insbesondere einen Zusatzladeboden, aus einem Holzwerkstoff herzustellen, beispielsweise aus einem Buchenholz-Schichtwerkstoff, da dieser kostengünstig herstellbar ist und problemlos bearbeitbar und recyclebar ist und eine optisch angenehme Oberfläche zeigt.

Nach einem weiteren Aspekt der Erfindung wird die Aufgabe durch ein Fahrzeug gelöst, das über mindestens eine erfindungsgemäße Laderaumfläche verfügt. Die Laderaumfläche ist bevorzugt als Ladeboden, insbesondere als Zusatzladeboden, des Fahrzeugs ausgebildet. Grundsätzlich kann die Laderaumfläche aber auch, wie bereits oben ausgeführt, eine Innen- oder Außenwandfläche oder eine Deckenfläche eines Fahrzeugs sein.

Hinsichtlich der Merkmale und der Vorteile der erfindungsgemäßen Verzurrschiene, der erfindungsgemäßen Laderaumfläche und des erfindungsgemäßen Fahrzeugs wird wechselweise Bezug aufeinander genommen, so dass die jeweiligen Merkmale und Vorteile den genannten anderen Aspekten der Erfindung ebenfalls zuzurechnen sind, ohne dass dies jeweils gesondert aufgeführt werden müsste.

Die Erfindung wird im Folgenden anhand eines Ausführungsbeispiels näher erläutert. In der Zeichnung zeigen:
- Figur 1: eine Verzurrschiene nach dem Stand der Technik (EP 2 910 420 A2);
- Figur 2: ein Querschnitt durch ein Ausführungsbeispiel einer erfindungsgemäßen Verzurrschiene an einem Ausführungsbeispiel einer Laderaumfläche, wobei der Querschnitt im Bereich eines Befestigungsmittels gezeichnet ist;
- Figur 3: ein Querschnitt durch das Ausführungsbeispiel der Figur 2, wobei der Querschnitt abseits eines Befestigungsmittels gezeichnet ist;
- Figur 4: eine Ansicht des Ausführungsbeispiels eines erfindungsgemäßen Ladebodens in einer Aufsichtdarstellung von schräg oben, mit mehreren Verzurrschienen;
- Figur 5: der Ladeboden der Figur 4, zur Verdeutlichung in einer teilweisen Explosionsdarstellung.

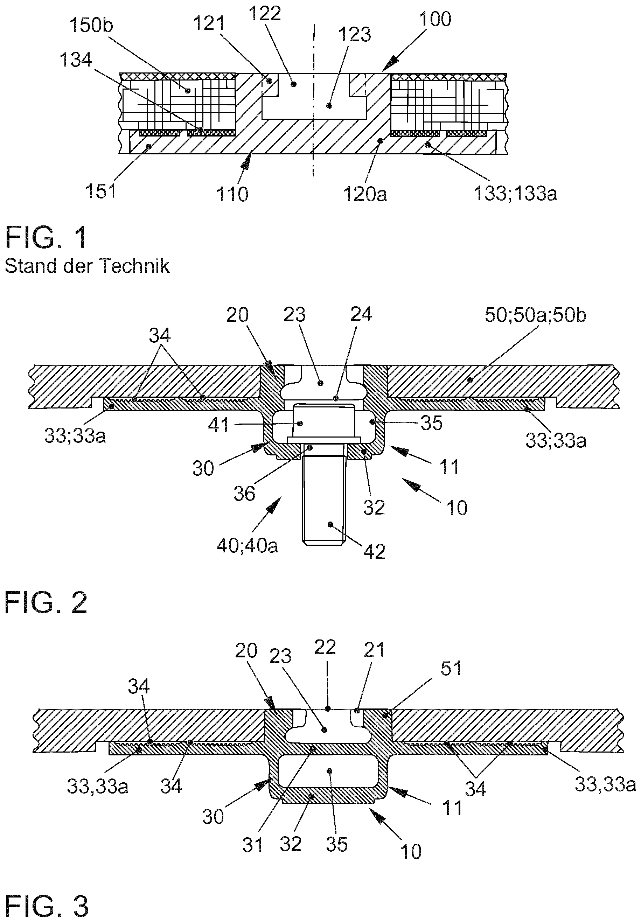

Figur 1 zeigt eine Verzurrschiene 100 nach dem Stand der Technik (EP 2 910 420 A2). Die Verzurrschiene 100 verfügt über einen im Wesentlichen im Querschnitt rechteckförmigen Grundkörper 110, der in einer länglich ausgebildeten Nut 151 eines Zusatzladebodens 150b eines Transportfahrzeugs angeordnet ist. An der dem Transportfahrzeuggestell zugewandten Unterseite des Grundkörpers 110 sind beidseitig längsseitlich vorstehende Anbringungsflansche 133 angeordnet. Die beiden Anbringungsflansche 133 sind als Klebeflansche 133a ausgebildet und über Klebeflächen 134 mit der Unterseite des Zusatzladebodens 150b verklebt. Der im Querschnitt im Wesentlichen rechteckförmige Grundkörper 110 ist als offenes Profil 120a ausgebildet. Auf der dem Transportfahrzeuggestell abgewandten Oberseite des Grundkörpers 110 befindet sich in der dortigen Aufnahmewandung 121 des offenen Profils 120a eine langgestreckte Aufnahmeöffnung 122, mittels derer Verzurrelemente zugänglich oder einführbar sind, die ganz oder teilweise in einem Hohlraum 123 des offenen Profils 120a aufgenommen sind. Der Grundkörper 110 der vorbekannten Verzurrschiene 100 verfügt als offenes Profil 120a nur über ein nicht optimales Maß an Eigensteifigkeit und Festigkeit.

Im Vergleich zu der Querschnittsdarstellung gemäß dem Stand der Technik in Figur 1 ist in Figur 2 eine Querschnittdarstellung eines Ausführungsbeispiels einer erfindungsgemäßen Verzurrschiene 10 dargestellt. Die Verzurrschiene 10 besitzt einen länglich ausgebildeten Grundkörper 11. Der Grundkörper 11 ist im Wesentlichen aus zwei Profilen zusammengesetzt, nämlich einem zumindest weitgehend offenem Profil 20, dass bei diesem Ausführungsbeispiel entlang der Längserstreckung 12 des Grundkörpers 11 der Verzurrschiene 10 vollständig offen ist, sowie aus einem zumindest weitgehend geschlossenen Profil 30. Ferner verfügt die Verzurrschiene 10 über zwei seitlich angebrachte, längsseitig vorstehende, als Klebeflansche 33a ausgebildete Anbringungsflansche 33. Die Verzurrschiene 10 ist einstückig als Strangpressprofil aus einer Aluminiumlegierung hergestellt. Das offene Profil 20 und das zumindest weitgehend geschlossene Profil 30 sind unmittelbar aneinander angeordnet und verfügen über eine gemeinsame Profilwandung 31. An dem offenen Profil 20 befindet sich - der gemeinsamen Profilwandung 31 gegenüberliegend - eine Aufnahmeöffnung 22, die sich über die Länge des Grundkörpers 11 entlang der Längserstreckung 12 der Verzurrschiene 10 erstreckt. Über die Aufnahmeöffnung 22 ist ein Hohlraum 23 in dem offenen Profil 20 zugänglich, in dem in an sich bekannter Art und Weise bekannte Verzurrelemente ganz oder teilweise aufgenommen werden können. Diese Verzurrelemente bilden keinen Gegenstand der Erfindung und sind hinlänglich bekannt und werden daher nicht weiter beschrieben. An dem zumindest weitgehend geschlossenen Profil 30 ist, der gemeinsamen Profilwandung 31 gegenüberliegend, eine Bodenwandung 32 angeordnet. Das zumindest weitgehend geschlossene Profil 30 umschließt einen Hohlraum 35.

Die Verzurrschiene 10 ist mit ihrem offenen Profil 20 in eine Nut 51 einer Laderaumfläche 50 eingelassen. Die Laderaumfläche 50 ist bei diesem Beispiel als Ladeboden 50a, nämlich als Zusatzladeboden 50b, aus einem Holzmaterial, nämlich aus Buchen-Schichtsperrholz, ausgebildet. Die Verbindung zwischen dem Ladeboden 50a und der Verzurrschiene 10 erfolgt mittels Klebeflächen 34 an den als Klebeflanschen 33a ausgebildeten Anbringungsflanschen 33. Die Klebeverbindung zwischen den Klebeflanschen 33a und dem Ladeboden 50a ergibt eine stabile und dauerhafte Anbringung und Verbindung von Verzurrschiene 10 am Ladeboden 50a.

Die räumliche Anordnung des als Zusatzladeboden 50b ausgebildeten Ladebodens 50a der Figur 2 und der Figur 3 entspricht der in den beiden Figuren gezeigten Anordnung, das heißt die Aufnahmeöffnung 22 für Verzurrelemente befindet sich auf der Oberseite der Verzurrschiene 10 und des Ladebodens 50a, während die Klebeflansche 33a an der Unterseite des Ladebodens 50a angeordnet sind. Ersichtlich entsteht durch die gewählte Anordnung eine ebene Lade-Oberfläche des Ladebodens 50a. Außerdem sind die vergleichsweise breiten Klebeflansche 33a für einen von oben aus dem Laderaum auf den Laderaumboden 50a blickenden Betrachter nicht sichtbar.

Der Querschnitt der Figur 2 ist an einer Stelle genommen, an der die Verzurrschiene 10 - und damit auch der Ladeboden 50a - mittels eines Befestigungsmittels 40 an der - hier nicht dargestellten - Karosserie des Fahrzeugs, an der der Ladeboden 50a angeordnet ist, befestigt ist. Das Befestigungsmittel 40 ist als Schraube 40a ausgebildet. Zur Anbringung von Verzurrschiene 10 und Ladeboden 50a an der Fahrzeugkarosserie wird zunächst der Ladeboden 50a mit der Verzurrschiene 10 an der gewünschte Stelle im Transportraum des Fahrzeugs positioniert. Das an der Unterseite des Ladebodens 50a angeordnete, dort nach unten abragende, zumindest weitgehend geschlossene Profil 30 wird dabei üblicherweise in einer Lücke zwischen zwei Karosseriesicken des Karosserieladenbodens positioniert. Es ist an der Verzurrschiene 10 vorgesehen, dass an geeigneten Positionen, die zugeordneten Befestigungspunkten an der Fahrzeugkarosserie entsprechen, in der gemeinsamen Profilwandung 31 Durchgangsöffnungen 24 vorgesehen sind. Im Anschluss an diese Durchgangsöffnungen 24 schließen sich - in der Figur 2 nach unten - jeweils Befestigungsöffnungen 36 in der Bodenwandung 32 des zumindest weitgehend geschlossenen Profils 30 an. Die Durchgangsöffnungen 24 und die Befestigungsöffnungen 36 sind jeweils als Rundlöcher oder, falls ein gewisser Toleranzausgleich erforderlich oder gewünscht ist, als Langlöcher ausgeführt. Bei geeigneter Anordnung entsprechen den Durchgangsöffnungen 24 und den Befestigungsöffnungen 36 zugeordnete Befestigungspunkte an der Fahrzeugkarosserie, die mit einem zum Schraubengewinde 42 der Schraube 40a passenden Gegengewinde versehen sind. Zur Verschraubung der Verzurrschiene und damit auch des Ladebodens 50a an der Karosserie kann nun durch die Aufnahmeöffnungen 22 eine Schraube 40a mit ihrem Schraubgewinde 42 voran eingeführt werden, die anschließend durch die Durchgangsöffnung 24 und die Befestigungsöffnung 36 hindurchtritt und das zugeordnete Befestigungs-Gegengewinde in der Fahrzeugkarosserie erreicht. Nach dem Anziehen der Schraube 40a liegt deren Schraubenkopf 41 am Rand der Befestigungsöffnung 36 auf, da der Durchmesser der Befestigungsöffnung 36 geringer gewählt ist als der Durchmesser des Schraubenkopfes 41, während der Durchmesser der Aufnahmeöffnung 22 und der Durchgangsöffnung 24 größer gewählt ist als der Durchmesser des Schraubenkopfes 41. Auf diese Weise kann der Schraubenkopf 41 vollständig im Hohlraum 35 des zumindest weitgehend geschlossenen Profils 30 aufgenommen werden, so dass der Hohlraum 23 des offenen Profils 20, der der Aufnahme von Verzurrelementen dient, von störenden Einflüssen der Schraube 40a frei bleibt.

Die in Figur 3 gezeigte Querschnittdarstellung entspricht im Wesentlichen der Querschnittdarstellung der Figur 2, ist aber an einer Stelle geschnitten, an der keine Anbringung eines Befestigungsmittels 40 vorgesehen ist. Dementsprechend ergibt sich in diesem Fall im Querschnitt des zumindest weitgehend geschlossenen Profils 30 ein vollständig geschlossener Hohlraum 35; eine Durchgangsöffnung 24 und eine Befestigungsöffnung 36 sind an dieser Stelle nicht vorhanden.

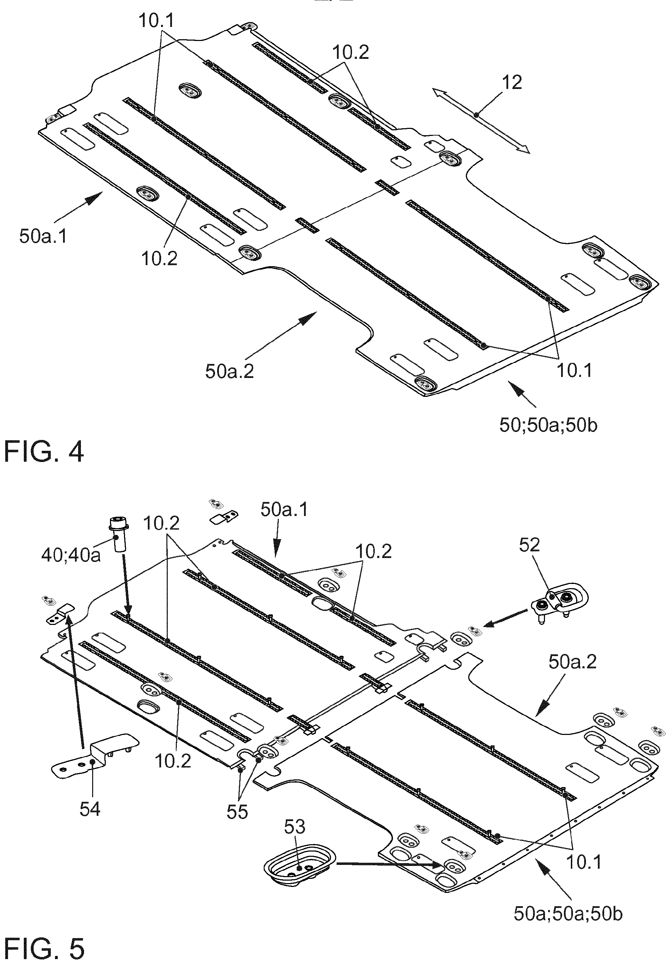

Die Figuren 4 und 5 zeigen eine Aufsicht von schräg oben auf das Ausführungsbeispiel des Ladebodens 50a mit eingesetzten Verzurrschienen 10. Figur 4 zeigt den Ladeboden 50a im vollständig montierten Zustand, während die Figur 5 eine teilweise Explosionsdarstellung ist, um das Zusammenwirken verschiedener Teile des Ladebodens 50a besser zu erläutern. Zur Vereinfachung ist die Karosserie des Fahrzeugs jeweils nicht dargestellt.

Bei dem Ladeboden 50a der Figuren 4 und 5 handelt es sich um einen Zusatzladeboden 50b, wie er grundsätzlich in ähnlicher Form - natürlich ohne Nutzung der vorliegenden Erfindung - vielfach in Nutzfahrzeugen verwendet wird. Der Ladeboden 50a ist aus zwei Teilen zusammengesetzt, nämlich aus einem ersten Ladebodenteil 50a.1 und aus einem zweiten Ladebodenteil 50a.2. Beide Ladebodenteile 50a.1, 50a.2 werden in der bereits geschilderten Weise mit der Fahrzeugkarosserie verbunden.

In den Ladeboden 50a integriert sind insgesamt sechs der zuvor beschriebenen Verzurrschienen 10. Die Längserstreckung 12 der Verzurrschienen 10 entspricht dabei der Längserstreckung 12 des Ladebodens 50a. In die ersten Ladebodenteile 50a.1 sind insgesamt fünf Verzurrschienen 10 eingelassen, nämlich zwei erste Verzurrschienen 10.1 und drei zweite Verzurrschienen 10.2. Die beiden ersten Verzurrschienen 10.1 besitzen den in den Figuren 2 und 3 gezeigten Aufbau, das heißt sie sind an mehreren -jeweils drei - Stellen mit Befestigungsmitteln 40 in Form von Schrauben 40a ausgestattet, die diese ersten Verzurrschienen 10.1 und damit den Ladebodenteil 50a.1 durch Verschraubung mit der Fahrzeugkarosserie verbinden. Die weiter außen an den Rändern des ersten Ladebodensteil 50a.1 angeordneten insgesamt drei zweiten Verzurrschienen 10.2 besitzen keine solchen Befestigungsmittel 40, da in diesem Bereich keine geeigneten Befestigungspunkte an der Karosserie vorhanden sind. Sie sind daher lediglich in der Figur 3 gezeigten Weise mit dem ersten Ladebodenteil 50a.1 verklebt.

Das zweite Ladebodenteil 50a.2 besitzt lediglich zwei erste Verzurrschienen 10.1, die beide jeweils über drei Befestigungsmittel 40 in Form von Schrauben 40a zur Verschraubung an der Kraftfahrzeugkarosserie verfügen.

Die beiden Ladebodenteile 50a.1 und 50a.2 sind, wie insbesondere in der Figur 5 ersichtlich, über zusätzliche Halter 54 und über in Abdeckungen 53 angeordnete Verzurrösen 52 mit der Kraftfahrzeugkarosserie verbunden. Dazu verfügen die mehreren Verzurrösen 52 jeweils über Schrauben als Befestigungsmittel an der Kraftfahrzeugkarosserie. Zusätzlich sichern Steckelemente 55 mit zugeordneten Aufnahmen an dem jeweils anderen Ladebodenteil die Verbindung der ersten und zweiten Ladebodenteile 50a.1, 50a.2 miteinander.

Aus der vorliegenden Beschreibung der Erfindung und aus den Zeichnungen wird deutlich, dass die zusammenwirkende Anordnung eines zumindest weitgehend offenen Profils 20 und eines zumindest weitgehend geschlossenen Profils 30 als gemeinsamer Bestandteil des Grundkörpers 11 der Verzurrschiene 10 die Festigkeit und Eigensteifigkeit der erfindungsgemäßen Verzurrschiene 10 gegenüber dem Stand der Technik beträchtlich erhöht. Diese erhöhte Eigensteifigkeit und Eigenfestigkeit stabilisiert und versteift zusätzlich auch den Ladeboden 50a. Dies wird insbesondere durch die feste und flächige Klebeverbindung zwischen der Verzurrschiene 10 und dem Ladeboden 50a gewährleistet.

### Bezugszeichenliste

- 10: Verzurrschiene
- 10.1: erste Verzurrschiene
- 10.2: zweite Verzurrschiene
- 11: Grundkörper
- 12: Längserstreckung

- 20: zumindest weitgehend offenes Profil, insbesondere offenes Profil
- 21: Aufnahmewandung
- 22: Aufnahmeöffnung
- 23: Hohlraum
- 24: Durchgangsöffnung

- 30: zumindest weitgehend geschlossenes Profil
- 31: gemeinsame Profilwandung
- 32: Bodenwandung
- 33: Anbringungsflansch
- 33a: Klebeflansch
- 34: Klebefläche
- 35: Hohlraum
- 36: Befestigungsöffnung

- 40: Befestigungsmittel
- 40a: Schraube
- 41: Schraubenkopf
- 42: Schraubengewinde

- 50: Laderaumfläche
- 50a: Ladeboden
- 50a.1: erster Ladebodenteil
- 50a.2: zweiter Ladebodenteil
- 50b: Zusatzladeboden
- 51: Nut
- 52: Verzurröse
- 53: Abdeckung
- 54: Halter
- 55: Steckelemente

- 100: Verzurrschiene (Stand der Technik)
- 110: Grundkörper (Stand der Technik)
- 120a: offenes Profil (Stand der Technik)
- 121: Aufnahmewandung (Stand der Technik)
- 122: Aufnahmeöffnung (Stand der Technik)
- 123: Hohlraum (Stand der Technik)
- 133: Anbringungsflansch (Stand der Technik)
- 133a: Klebeflansch (Stand der Technik)
- 134: Klebefläche (Stand der Technik)
- 150b: Zusatzladeboden (Stand der Technik)
- 151: Nut (Stand der Technik)

## Patentansprüche

1. Fahrzeug mit einem Ladeboden, der eine Mehrzahl von Verzurrschienen (10) für die Befestigung von Ladegut an einem Fahrzeug mittels Verzurrelementen aufweist,
wobei die Verzurrschienen (10) jeweils mit einem länglich ausgebildeten Grundkörper (11) an einer Laderaumfläche (50) des Fahrzeugs angeordnet sind,
und wobei der Grundkörper (11) jeweils ein im Querschnitt zumindest weitgehend offenes Profil (20) zur Aufnahme der Verzurrelemente aufweist,
wobei die Verzurrschienen (10) ferner jeweils ein im Querschnitt zumindest weitgehend geschlossenes Profil (30) umfassen, das parallel zu dem zumindest weitgehend offenen Profil (20) angeordnet ist, **dadurch gekennzeichnet, dass** der Ladeboden (50a) aus einem ersten Ladebodenteil (50a.1) und einem zweiten Ladebodenteil (50a.2) zusammengesetzt ist, und dass in den ersten Ladebodenteil (50a.1) zwei erste Verzurrschienen (10.1) und drei zweite Verzurrschienen (10.2) eingelassen und in den zweiten Ladebodenteil (50a.2) zwei erste Verzurrschienen (10.1) eingelassen sind, wobei die ersten Verzurrschienen (10.1) an jeweils drei Stellen mit Schrauben (40a) mit der Fahrzeugkarosserie verbunden sind, und wobei die zweiten Verzurrschienen (10.2) ohne Befestigungsmittel zur Verbindung mit der Fahrzeugkarosserie mit dem ersten Ladebodenteil (50a.1) verklebt sind.

2. Fahrzeug nach dem vorhergehenden Anspruch, **dadurch gekennzeichnet, dass** das zumindest weitgehend offene Profil (20) über mindestens eine in seiner Längserstreckung (12) ausgerichtete, länglich ausgebildete Aufnahmeöffnung (22) zur Aufnahme von Verzurrelementen verfügt, und/oder dass das zumindest weitgehend offene Profil (20) über mehrere Aufnahmeöffnungen zur Aufnahme von Verzurrelementen verfügt, wobei die Aufnahmeöffnungen kollinear entlang der Längserstreckung (12) des zumindest weitgehend offenen Profils (20) angeordnet sind.

3. Fahrzeug nach Anspruch 2, **dadurch gekennzeichnet, dass** das zumindest weitgehend geschlossene Profil (30) gegenüberliegend der mindestens einen länglich ausgebildeten Aufnahmeöffnung (22) und/oder den mehreren Aufnahmeöffnungen angeordnet ist.

4. Fahrzeug nach einem der vorhergehenden Ansprüche, **dadurch gekennzeichnet, dass** das zumindest weitgehend geschlossene Profil (30) an dem zumindest weitgehend offenen Profil (20) angeordnet ist.

5. Fahrzeug nach einem der vorhergehenden Ansprüche, **dadurch gekennzeichnet, dass** das zumindest weitgehend offene Profil (20) und das zumindest weitgehend geschlossene Profil (30) im Querschnitt über eine gemeinsame Profilwandung (31) verfügen.

6. Fahrzeug nach einem der vorhergehenden Ansprüche, **dadurch gekennzeichnet, dass** das zumindest weitgehend offene Profil (20) und das zumindest weitgehend geschlossene Profil (30) einstückig miteinander ausgeführt sind, insbesondere als Strangpressprofil.

7. Fahrzeug nach einem der vorhergehenden Ansprüche, **dadurch gekennzeichnet, dass** die Verzurrschiene (10) über mindestens einen, vorzugsweise zwei in der Längserstreckung der Verzurrschiene (10) ausgerichtete, länglich ausgebildete Anbringungsflansche (33) zur Anbringung an der Laderaumfläche (50) verfügt.

8. Fahrzeug nach Anspruch 7, **dadurch gekennzeichnet, dass** die Verzurrschienen (10) jeweils zumindest teilweise in einer länglich ausgebildeten Nut (51) der Laderaumfläche (50) angeordnet ist.

9. Fahrzeug nach einem der Ansprüche 7 bis 8, **dadurch gekennzeichnet, dass** die Verzurrschienen (10) jeweils durch eine Klebeverbindung mit der Laderaumfläche (50) verbunden sind, vorzugsweise durch eine Klebeverbindung des mindestens einen Anbringungsflansches (33) mit der Laderaumfläche(50) .

10. Fahrzeug nach einem der vorstehenden Ansprüche, **dadurch gekennzeichnet, dass** die Laderaumfläche (50) aus einem Holzwerkstoff hergestellt ist.

11. Fahrzeug nach einem der vorstehenden Ansprüche, **dadurch gekennzeichnet, dass** die Laderaumfläche (50) als Ladeboden (50a), vorzugsweise als Zusatzladeboden (50b), des Fahrzeugs ausgebildet ist.

12. Fahrzeug nach Anspruch 11, **dadurch gekennzeichnet, dass** die beide Ladebodenteile (50a.1, 50a.2) über zusätzliche Halter (54) und über in Abdeckungen (53) angeordnete Verzurrösen (52) mit der Karosserie des Fahrzeugs verbunden sind.

## Claims

1. Vehicle with a loading floor which has a plurality of lashing rails (10) for securing loaded goods to a vehicle by means of lashing elements,
wherein the lashing rails (10) are each arranged with an elongated base body (11) on a loading space area (50) of the vehicle,
and wherein the base body (11) has in each case a profile (20) that is at least largely open in cross-section for receiving the lashing elements,
wherein the lashing rails (10) further each comprise a profile (30) which is at least largely closed in cross-section and which is arranged in parallel to the at least largely open profile (20), **characterized in that** the loading floor (50a) is composed of a first loading floor section (50a.1) and a second loading floor section (50a.2), **and that** two, first lashing rails (10.1) and three, second lashing rails (10.2) are set into the first loading floor section (50a.1), and two, first lashing rails (10.1) are set into second loading floor section (50a.2), wherein the first lashing rails (10.1) are connected by screws (40a) to the vehicle body at three points in each case, and wherein the second lashing rails (10.2) are glued to the first loading floor section (50a.1) without fastening means for connecting to the vehicle body.

2. Vehicle according to the preceding claim, **characterized in that** the at least largely open profile (20) has at least one, elongated, receiving opening (22), aligned in its longitudinal extent (12), for receiving lashing elements, **and/or that** the at least largely open profile (20) has several receiving openings for receiving lashing elements, wherein the receiving openings are arranged collinearly along the longitudinal extent (12) of the at least largely open profile (20).

3. Vehicle according to claim 2, **characterized in that** the at least largely closed profile (30) is arranged opposite the at least one elongated receiving opening (22) and/or the several receiving openings.

4. Vehicle according to one of the preceding claims, **characterized in that** the at least largely closed profile (30) is arranged on the at least largely open profile (20).

5. Vehicle according to one of the preceding claims, **characterized in that** the at least largely open profile (20) and the at least largely closed profile (30) have, in cross-section, a common profile wall (31).

6. Vehicle according to one of the preceding claims, **characterized in that** the at least largely open profile (20) and the at least largely closed profile (30) are designed to be integral with one another - in particular, as an extruded profile.

7. Vehicle according to one of the preceding claims, **characterized in that** the lashing rail (10) has at least one - preferably, two - elongated mounting flanges (33), oriented in the longitudinal extension of the lashing rail (10), for attachment to the loading space area (50).

8. Vehicle according to claim 7, **characterized in that** the lashing rails (10) are in each case arranged at least partially in an elongated groove (51) of the loading space area (50).

9. Vehicle according to one of claims 7 through 8, **characterized in that** the lashing rails (10) are each connected to the loading space area (50) by an adhesive connection - preferably, by an adhesive connection of the at least one mounting flange (33) to the loading space area (50).

10. Vehicle according to one of the preceding claims, **characterized in that** the loading space area (50) is made of a wooden material.

11. Vehicle according to one of the preceding claims, **characterized in that** the loading space area (50) is designed as a loading floor (50a) - preferably, as an auxiliary loading floor (50b) - of the vehicle.

12. Vehicle according to claim 11, **characterized in that** the two loading floor sections (50a.1, 50a.2) are connected to the body of the vehicle via additional holders (54) and via lashing eyes (52) arranged in coverings (53).

## Revendications

1. Véhicule comprenant un plancher de chargement, lequel présente une pluralité de rails d'arrimage (10) pour la fixation de marchandise de chargement à un véhicule au moyen d'éléments d'arrimage,
les rails d'arrimage (10) étant disposés respectivement avec un corps de base (11) oblong dans un espace de chargement (50) du véhicule,
et le corps de base (11) présentant respectivement un profilé (20) au moins largement ouvert dans la section transversale pour la réception des éléments d'arrimage,
les rails d'arrimage (10) comprenant en outre respectivement un profilé (30) au moins largement fermé dans la section transversale, lequel est disposé parallèle au profilé (20) au moins largement ouvert, **caractérisé en ce que** le plancher de chargement (50a) est composé d'une première partie de plancher de chargement (50a.1) et d'une seconde partie de plancher de chargement (50a.2), **et en ce que** deux premiers rails d'arrimage (10.1) et trois seconds rails d'arrimage (10.2) sont intégrés dans la première partie de plancher de chargement (50a.1) et deux premiers rails d'arrimage (10.1) sont intégrés dans la seconde partie de plancher de chargement (50a.2), les premiers rails d'arrimage (10.1) étant connectés respectivement à trois emplacements par des vis (40a) à la carrosserie, et les seconds rails d'arrimage (10.2) étant collés à la première partie de plancher de chargement (50a.1) sans moyens de fixation pour la connexion à la carrosserie du véhicule.

2. Véhicule selon la revendication précédente, **caractérisé en ce que** le profilé (20) au moins largement ouvert dispose d'au moins une ouverture de réception (22) oblongue alignée avec son extension longitudinale (12) pour la réception d'éléments d'arrimage, **et/ou en ce que** le profilé (20) au moins largement ouvert dispose de plusieurs ouvertures de réception pour la réception d'éléments d'arrimage, les ouvertures de réception étant disposées colinéairement le long de l'extension longitudinale (12) du profilé (20) au moins largement ouvert.

3. Véhicule selon la revendication 2, **caractérisé en ce que** le profilé (30) au moins largement fermé est disposé opposé à l'au moins une ouverture de réception (22) oblongue et/ou aux plusieurs ouvertures de réception.

4. Véhicule selon l'une quelconque des revendications précédentes, **caractérisé en ce que** le profilé (30) au moins largement fermé est disposé contre le profilé (20) au moins largement ouvert.

5. Véhicule selon l'une quelconque des revendications précédentes, **caractérisé en ce que** le profilé (20) au moins largement ouvert et le profilé (30) au moins largement fermé disposent dans la section transversale d'une paroi de profilé (31) commune.

6. Véhicule selon l'une quelconque des revendications précédentes, **caractérisé en ce que** le profilé (20) au moins largement ouvert et le profilé (30) au moins largement fermé sont réalisés ensemble d'une seule pièce, en particulier sous la forme de profilé extrudé.

7. Véhicule selon l'une quelconque des revendications précédentes, **caractérisé en ce que** le rail d'arrimage (10) dispose d'au moins une, de préférence de deux, bride de montage (33) oblongue alignée avec l'extension longitudinale du rail d'arrimage (10) pour le montage dans l'espace de chargement (50).

8. Véhicule selon la revendication 7, **caractérisé en ce que** les rails d'arrimage (10) sont disposés respectivement au moins partiellement dans une rainure (51) oblongue de l'espace de chargement (50).

9. Véhicule selon l'une quelconque des revendications 7 à 8, **caractérisé en ce que** les rails d'arrimage (10) sont connectés respectivement par une liaison collée avec l'espace de chargement, de préférence par une liaison collée de l'au moins une bride de montage (33) avec l'espace de chargement (50).

10. Véhicule selon l'une quelconque des revendications précédentes, **caractérisé en ce que** l'espace de chargement (50) est réalisé à partir d'un matériau en bois.

11. Véhicule selon l'une quelconque des revendications précédentes, **caractérisé en ce que** l'espace de chargement (50) est conçu comme plancher de chargement (50a), de préférence comme plancher de chargement supplémentaire (50b), du véhicule.

12. Véhicule selon la revendication 11, **caractérisé en ce que** les deux parties de plancher de chargement (50a.1, 50a.2) sont connectées à la carrosserie du véhicule au moyen de supports (54) supplémentaires et au moyen d'œillets d'arrimage (52) disposés dans des recouvrements (53).
